# EUROPÄISCHE PATENTANMELDUNG

(11) **EP 4 844 916 A1**
(43) Veröffentlichungstag der Anmeldung: **25.11.2026**
(21) Anmeldenummer: 26176150.6
(22) Anmeldetag: 04.05.2026
(51) Int. Cl.: H01M 50/224, H01M 50/222, H01M 50/209, H01M 50/233, H01M 50/249, H01M 50/262

(54) **GEHÄUSE FÜR EINE BATTERIE SOWIE BATTERIE MIT EINEM DERARTIGEN GEHÄUSE**

(30) Priorität: 21.05.2025 DE 102025119726
(71) Anmelder: Triathlon Batterien GmbH, 08371 Glauchau (DE)
(72) Erfinder: Unkelbach, Michael, 63825 Westerngrund (DE); Petry, Andre, 53797 Lohmar (DE)
(74) Vertreter: Rau, Schneck & Hübner Patentanwälte Rechtsanwälte PartGmbB

(57) **Zusammenfassung**

Ein Gehäuse (2) für eine Batterie (1) umfasst einen Behälter (4), der eine Bodenplatte (6) und eine an der Bodenplatte (6) umlaufende Seitenwandung (7) und Gusseisen und/oder Gussstahl aufweist, sowie einen lösbar mit dem Behälter (4) verbindbaren Deckel (5).

## Beschreibung

Der Inhalt der deutschen Patentanmeldung DE 10 2025 119 726.1 wird durch Bezugnahme hierin aufgenommen.

Die Erfindung betrifft ein Gehäuse für eine Batterie, insbesondere eine Traktionsbatterie, sowie eine Batterie mit einem derartigen Gehäuse.

Traktionsbatterien sind bekannt und werden beispielsweise für Flurförderzeuge, insbesondere Hubstapler, verwendet. Die Batterie versorgt das Flurförderzeug mit elektrischem Strom für dessen Vortrieb und/oder Nebenaggregate.

Aus dem Stand der Technik ist bekannt, Bleibatterien durch leistungsfähigere Lithium-Ionenbatterien zu ersetzen. Lithium-Ionenbatterien weisen eine gegenüber Bleibatterien reduzierte Dichte auf. Da in Flurförderzeugen die Batterie auch Teil des für die Stabilität des Flurförderzeugs erforderlichen Gegengewichts ist, ist ein unmittelbarer Austausch einer Bleibatterie durch eine Lithium-Ionenbatterie nicht ohne weiteres möglich. DE 10 2014 106 644 A1 schlägt ein modulares Batteriegehäuse vor, das durch Zusatzgewichte so ausgeführt werden kann, dass eine Lithium-Ionenbatterie die Fahrstabilität des Flurförderzeugs nicht beeinträchtigt. Die Ausführung des modularen Gehäuses ist umständlich und erfordert das Vorhalten von Einzelteilen, insbesondere Zusatzgewichtplatten.

Der Erfindung liegt die Aufgabe zugrunde, eine Batterie, insbesondere für ein Flurförderzeug, derart bereitzustellen, dass sie in dem Flurförderzeug als Teil des Gegengewichts nutzbar ist.

Diese Aufgabe ist erfindungsgemäß gelöst durch ein Gehäuse mit den im Anspruch 1 angegebenen Merkmalen sowie durch eine Batterie mit den im Anspruch 11 angegebenen Merkmalen.

Kern der Erfindung ist, dass ein Gehäuse für eine Batterie einen, insbesondere einteilig ausgeführten, Behälter umfasst, der Gusseisen und/oder Gussstahl aufweist. Der Behälter ist aus Gusseisen und/oder Gussstahl hergestellt, insbesondere besteht der Behälter aus Gusseisen und/oder Gussstahl.

Das verwendete Gusseisen hat insbesondere einen Kohlenstoffgehalt von mindestens 2,9 % und/oder höchstens von 3,7 %, einen Siliciumgehalt von mindestens 1,7 % und/oder höchstens 2,5 % und/oder einen Mangangehalt von mindestens 0,35 % und/oder höchstens 1,0 %. Die Zugfestigkeit des Gusseisens beträgt mindestens 120 N/mm², insbesondere mindestens 150 N/mm², insbesondere mindestens 200 N/mm², insbesondere mindestens 210 N/mm² und insbesondere mindestens 250 N/mm².

Stahlguss umfasst Eisen-Kohlenstoff-Legierungen, deren Siliciumgehalt höchstens 0,6 %, deren Mangangehalt höchstens 1,0 % und deren Kohlenstoffgehalt höchstens 0,5 % beträgt. Zusätzlich können Legierungselemente wie Chrom, Nickel, Molybdän, Vanadium und/oder Wolfram beigefügt sein. Als Stahlguss kann beispielsweise G42CrMo4 verwendet werden. Gussstahl zeichnet sich insbesondere durch seine guten mechanischen Eigenschaften, seine Duktilität und seine Schweißbarkeit aus.

Es wurde erkannt, dass ein Behälter aus Gusseisen und/oder Gussstahl vorteilhaft durch Metallguss hergestellt werden kann. Der Behälter ist stabil.

Insbesondere weist der Behälter ein ausreichendes Gewicht auf, um in einem Flurförderzeug als Gegengewicht zu dienen. Der Behälter weist in Abhängigkeit seiner Baugröße insbesondere eine Masse von mindestens 100 kg, insbesondere von mindestens 200 kg, insbesondere von mindestens 300 kg, insbesondere von mindestens 500 kg, insbesondere von mindestens 700 kg, insbesondere von mindestens 900 kg, von mindestens 1000 kg, insbesondere von mindestens 1200 kg, insbesondere von mindestens 1300 kg, insbesondere von 1350 kg, insbesondere von mindestens 1500 kg, insbesondere von mindestens 2000 kg, insbesondere von mindestens 2500 kg, insbesondere von mindestens 3000 kg und insbesondere von mindestens 3500 kg auf.

Der Behälter weist eine Bodenplatte auf, mit der eine an der Bodenplatte umlaufend angeordnete Seitenwandung verbunden ist. Der Behälter ist insbesondere einteilig ausgeführt, insbesondere als quaderförmiger Hohlbehälter.

Gemäß einer alternativen Ausgestaltung kann der Behälter auch mehrteilig ausgeführt sein. Beispielsweise kann der Behälter mehrere, insbesondere zwei L-förmige Komponenten aufweisen. Diese L-förmigen Behälterkomponenten umfassen insbesondere jeweils eine Seitenwand und einen Teil der Bodenplatte. Die L-förmigen Behälterkomponenten sind insbesondere identisch ausgeführt und können einander gegenüberliegend angeordnet und mit stirnseitigen Platten zu dem geschlossenen Behälter verbunden werden. Im Ergebnis resultiert insbesondere ein quaderförmiger Hohlbehälter.

Das Gehäuse weist ferner einen Deckel auf, der mit dem Behälter lösbar verbindbar ist. Insbesondere kann der Deckel an dem Behälter angeschraubt werden. Dazu weist der Behälter mindestens eine Gewindebohrung und insbesondere mehrere Gewindebohrungen auf, in die jeweils eine Befestigungsschraube eingeschraubt werden kann. Entsprechend weist der Deckel Durchgangsöffnungen für die Befestigungsschrauben auf. Die Gewindebohrungen sind an dem Behälter, insbesondere an einer Stirnfläche der Seitenwandung, angeordnet. Die Stirnfläche ist insbesondere der Bodenplatte abgewandt.

Ein Gehäuse gemäß Anspruch 2 eignet sich insbesondere für die Aufnahme von quaderförmigen Batteriemodulen. Die Bodenplatte kann auch eine anders geformte, insbesondere polygonale, Innenkontur aufweisen, die beispielsweise dreieckig, fünfeckig, sechseckig, achteckig oder in anderer Weise ausgeführt ist. Die Innenkontur kann auch rund oder oval ausgeführt sein. Insbesondere kann die Innenkontur der Bodenplatte geometrisch un-ähnlich zu der Außenkontur der Bodenplatte ausgeführt sein.

Gusseisen-Material gemäß Anspruch 3 hat sich als besonders vorteilhaft erwiesen. Das Material ist vorteilhaft verarbeitbar. Der Behälter weist eine hohe Stabilität auf.

Eine Seitenwandung gemäß Anspruch 4 gewährleistet eine ausreichende Stabilität des Gehäuses. Funktionskomponenten, insbesondere Befestigungsmittel, insbesondere Befestigungsbohrungen und/oder Gewindebohrungen, können in der Seitenwandung integriert werden, ohne dass es die Stabilität des Behälters beeinträchtigt. Die Mindestwanddicke beträgt insbesondere mindestens 25 mm, insbesondere mindestens 30 mm, insbesondere mindestens 35 mm, insbesondere mindestens 40 mm und insbesondere mindestens 45 mm.

Befestigungsmittel gemäß Anspruch 5 vereinfachen das Befestigen eines Batteriemoduls und/oder eines Haltebauteils am Behälter. Dadurch, dass die Befestigungsmittel integriert ausgebildet sind, sind diese besonders stabil am Behälter angeordnet. Die Befestigungsmittel sind insbesondere als Bohrungen und insbesondere als Gewindebohrungen ausgeführt. Ein Batteriemodul und/oder ein Haltebauteil kann mit entsprechend ausgeführten Befestigungselementen, insbesondere Befestigungsstiften und/oder Befestigungsschrauben, am Behälter befestigt werden. Die Montage der Batterie ist dadurch vereinfacht. Als Haltebauteil dient beispielsweise eine Halteplatte, an der mindestens ein Batteriemodul und/oder Technikkomponenten befestigt werden können. Ein Haltebauteil kann auch ein Haltekäfig sein, der insbesondere wannenartig ausgeführt ist und zur Aufnahme eines Batteriemoduls oder mehrerer Batteriemodule dient.

Die Anordnung der Befestigungsmittel gemäß Anspruch 6 ist besonders stabil. Dadurch ist die Befestigung des mindestens einen Batteriemoduls und/oder des Haltebauteils an dem Behälter stabil ausgeführt.

Die Ausgestaltung der Befestigungsmittel gemäß Anspruch 7 ermöglicht eine vorteilhafte, weil unkomplizierte Montage des mindestens einen Batteriemoduls und/oder des Haltebauteils am Behälter. Die Zugänglichkeit der Befestigungsmittel von oben durch die Öffnung des Behälters ist gegeben.

Ein Gehäuse gemäß Anspruch 8 ermöglicht eine verbesserte Volumenausnutzung des Behälters. Insbesondere kann der Hohlraum des Behälters in mehrere Lagen unterteilt werden. Eine erste Lage kann dadurch gebildet werden, dass das mindestens eine Batteriemodul und/oder Technikkomponenten unmittelbar an der Bodenplatte befestigt werden. In diesem Fall ist das mindestens eine Befestigungsmittel in der Bodenplatte integriert. Der Vertikalabstand des Befestigungsmittels zur Bodenplatte beträgt 0.

Das mindestens eine weitere Befestigungsmittel ist mit einem Vertikalabstand zur Bodenplatte angeordnet, der von 0 verschieden ist. Es ist auch denkbar, dass zwei Befestigungsmittel mit Vertikalabstand zur Bodenplatte angeordnet sind, wobei der jeweilige Vertikalabstand unterschiedlich ist. Es ist außerdem denkbar, mehr als zwei Befestigungsmittel mit jeweils unterschiedlichem Vertikalabstand zur Bodenplatte anzuordnen, also beispielsweise mit einem ersten Abstand von 0 in der Bodenplatte selbst, mit einem zweiten Abstand und einem dritten Abstand, der größer ist als der zweite Abstand.

Die Ausgestaltung des Gehäuses gemäß Anspruch 9 eignet sich besonders für die Herstellung als Gussbauteil. Die Seitenwandung weist an ihrer Außenseite, die dem vom Behälter umgebenen Hohlraum abgewandt ist, Ausführschrägen auf. Der Winkel für die Ausführschrägen zwischen Bodenplatte und Seitenwandung ist größer als 90° und beträgt insbesondere mindestens 90,5° und/oder mindestens 91,5°. Insbesondere sind die Ausführschrägen auch an der Innenkontur des Behälters ausgeführt, also zwischen der Oberseite der Bodenplatte und der Innenseite der Seitenwandung. Zusätzlich oder alternativ sind die Ausführschrägen auch an einer Innenseite der Seitenwandung ausgeführt. Dieser Winkel ist also zwischen der Bodenplatte und der Innenseite der Seitenwandung gebildet. Insbesondere sind die Winkel für die Ausführschrägen an dem jeweiligen Teil der Seitenwandung an Außenseite und Innenseite identisch.

Eine Vertiefung gemäß Anspruch 10 verbessert die Abdichtung des Deckels am Behälter. Die Vertiefung, die insbesondere umlaufend als Nut ausgeführt ist, ist an einer der Bodenplatte abgewandten Stirnfläche der Seitenwandung angeordnet. Die Vertiefung dient als Aufnahme einer, insbesondere umlaufenden und/oder selbstklebenden, Dichtung für den Deckel. Die Vertiefung weist insbesondere eine Tiefe von mindestens 2 mm, insbesondere mindestens 3 mm und insbesondere 5 mm auf. In Umfangsrichtung weist die Vertiefung eine Breite von mindestens 15 mm, insbesondere mindestens 20 mm und insbesondere mindestens 23 mm auf. Die Abmessungen der Nut, insbesondere deren Tiefe und/oder deren Breite, sind insbesondere auf die einzulegende Dichtung abgestimmt, so dass eine zuverlässige Abdichtung des Deckels am Behälter gewährleistet ist. Dadurch kann das Gehäuse insgesamt spritzwassergeschützt und insbesondere wasserdicht ausgeführt werden. Es ist auch denkbar, die Dichtung als Flachdichtung auszuführen. Die Vertiefung ist insbesondere an einer dem Hohlraum zugewandten Innenkontur der Stirnfläche der Seitenwandung angeordnet. Die Vertiefung ist zum Hohlraum hin offen. Die Vertiefung ist zur Außenseite des Behälters abgeschlossen.

Eine Batterie gemäß Anspruch 11 weist im Wesentlichen die Vorteile des Gehäuses auf, worauf hiermit verwiesen wird. Die Batterie ist insbesondere eine Traktionsbatterie. Die Batterie dient insbesondere für den Einsatz in einem Flurförderzeug, insbesondere in einem Hubstapler. Die Batterie umfasst insbesondere mindestens ein Batteriemodul und insbesondere mehrere Batteriemodule, die in dem Gehäuse lösbar befestigt sind. Die Batteriemodule sind insbesondere Hochleistungsbatterien und insbesondere Lithium-Ionenbatterien.

Die Befestigung des mindestens einen Batteriemoduls gemäß Anspruch 12 ist robust. Dadurch, dass das Batteriemodul unmittelbar an dem Behälter befestigt ist, ist die Verbindung zwischen Batteriemodul und Behälter robust. Insbesondere weist das mindestens eine Batteriemodul stiftartige Befestigungselemente auf, die insbesondere an einer Unterseite des Batteriemoduls angebracht sind. Mit den stiftartigen Befestigungselementen kann das mindestens eine Batteriemodul in den korrespondierenden Befestigungsmitteln des Behälters angeordnet werden. Befestigungselemente können auch als Befestigungsschrauben ausgeführt sein.

Zusätzlich oder alternativ zu der unmittelbaren Befestigung gemäß Anspruch 12 dient ein am Behälter lösbar befestigbares Haltebauteil gemäß Anspruch 13 zum mittelbaren Befestigen des mindestens einen Batteriemoduls und/oder mindestens eines Technikmoduls. Dadurch kann die Batterie vorteilhaft modular aufgebaut sein. Insbesondere ist die Fertigung dadurch vereinfacht, indem eine Vorfertigung stattfindet. Insbesondere können mindestens ein Batteriemodul und/oder mindestens ein Technikmodul an dem Haltebauteil vorab befestigt werden. Das Haltebauteil kann mit den daran befestigten Modulen gemeinsam im Behälter befestigt werden.

Die Ausführung des Haltebauteils als Halteplatte gemäß Anspruch 14 ermöglicht eine unkomplizierte Montage und insbesondere eine vorteilhaften, platzsparende mehrlagige Anordnung von Komponenten im Behälter. Alternativ kann das Haltebauteil auch als Haltekäfig ausgeführt sein. Ein Haltekäfig ist insbesondere wannenartig ausgeführt mit einem Bodenelement und Seitenelementen, die an dem Bodenelement befestigt sind. In den Haltekäfig kann das mindestens eine Batteriemodul eingesetzt werden. Das mindestens eine Batterieelement ist in dem Haltekäfig vorteilhaft angeordnet.

Eine Öffnung am Deckel gemäß Anspruch 15 ermöglicht eine vorteilhafte Durchführung von Anschlüssen der Batterie. Die Anschlüsse führen in den Hohlraum des Behälters, insbesondere zu einer Technikplatte. Das Anschließen der Batterie ist dadurch vereinfacht. Insbesondere sind die Anschlüsse an einer Kontaktplatte gehalten, die an der Öffnung des Deckels derart angeordnet und lösbar verbindbar ist, dass die Öffnung des Deckels durch die Kontaktplatte verschlossen ist.

Sowohl die in den Patentansprüchen angegebenen Merkmale als auch die in den nachfolgenden Ausführungsbeispielen erfindungsgemäßer Gehäuse und Batterien angegebenen Merkmale sind jeweils für sich allein oder in Kombination miteinander geeignet, den erfindungsgemäßen Gegenstand weiterzubilden. Die jeweiligen Merkmalskombinationen stellen hinsichtlich der Weiterbildungen des Erfindungsgegenstandes keine Einschränkung dar, sondern weisen im Wesentlichen lediglich beispielhaften Charakter auf.

Weitere vorteilhafte Ausgestaltungen, zusätzliche Merkmale und Einzelheiten der Erfindung ergeben sich aus der nachfolgenden Beschreibung von Ausführungsbeispielen anhand der Zeichnung. Es zeigen:
- Fig. 1: eine perspektivische Ansicht einer Batterie mit einem erfindungsgemäßen Gehäuse,
- Fig. 2: eine Schnittdarstellung gemäß Schnittlinie II-II in Fig. 1,
- Fig. 3: eine Explosionsdarstellung der Batterie gemäß Fig. 1,
- Fig. 4: eine Ansicht von oben in den Behälter des Gehäuses gemäß Fig. 1,
- Fig. 5: eine Schnittdarstellung gemäß Schnittlinie V-V in Fig. 4,
- Fig. 6: eine Schnittdarstellung gemäß Schnittlinie VI-VI in Fig. 5,
- Fig. 7: eine vergrößerte Detaildarstellung des Details VII in Fig. 6,
- Fig. 8: eine Fig. 3 entsprechende Explosionsdarstellung einer Batterie mit einem Gehäuse gemäß einem zweiten Ausführungsbeispiel,
- Fig. 9: eine Fig. 2 entsprechende Schnittdarstellung der Batterie gemäß Fig. 8 im montierten Zustand,
- Fig. 10: eine Explosionsdarstellung eines Behälters für ein Gehäuse gemäß einem dritten Ausführungsbeispiel.

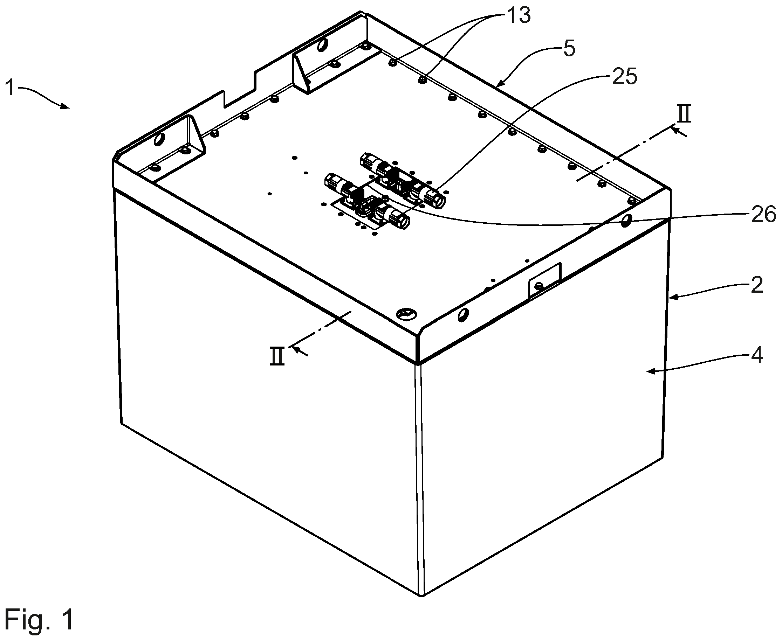

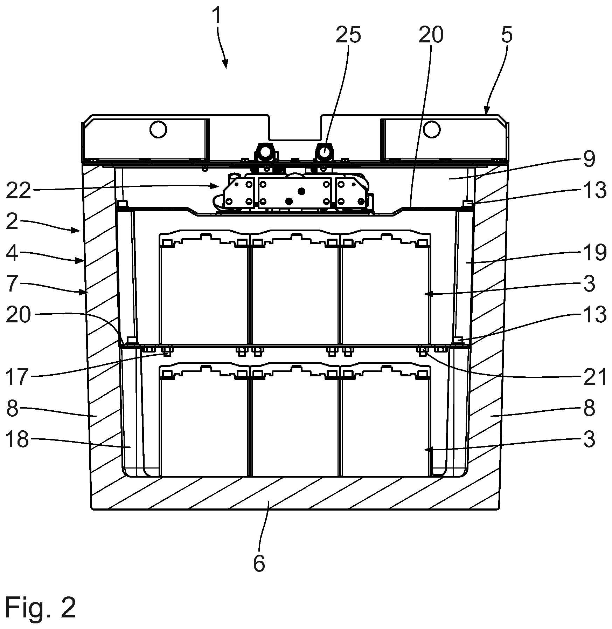

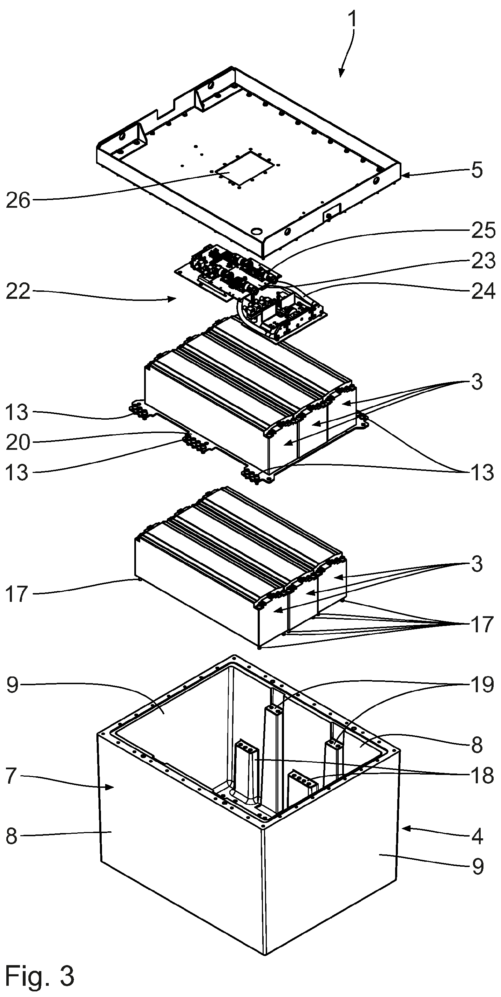

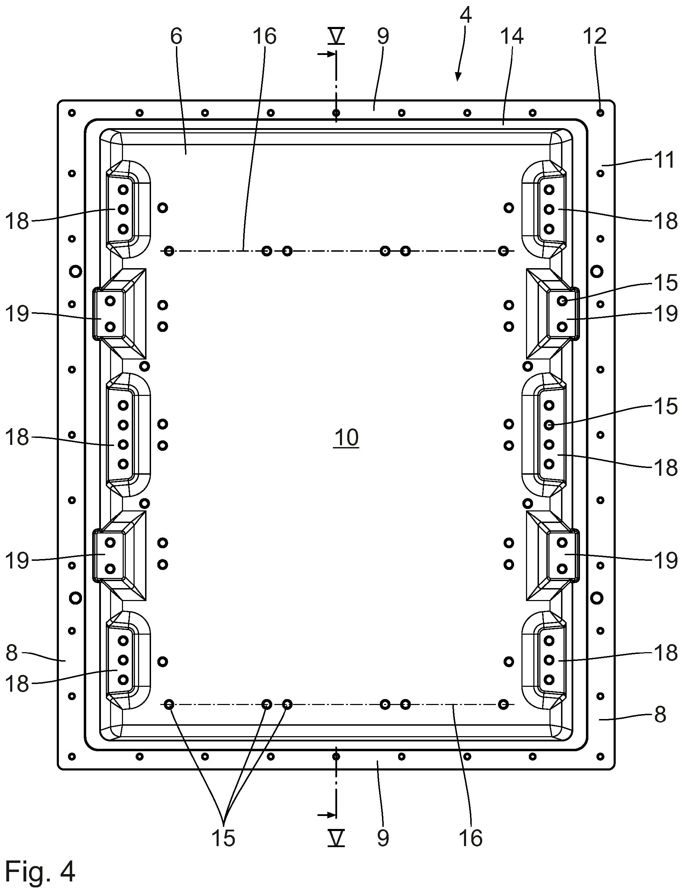

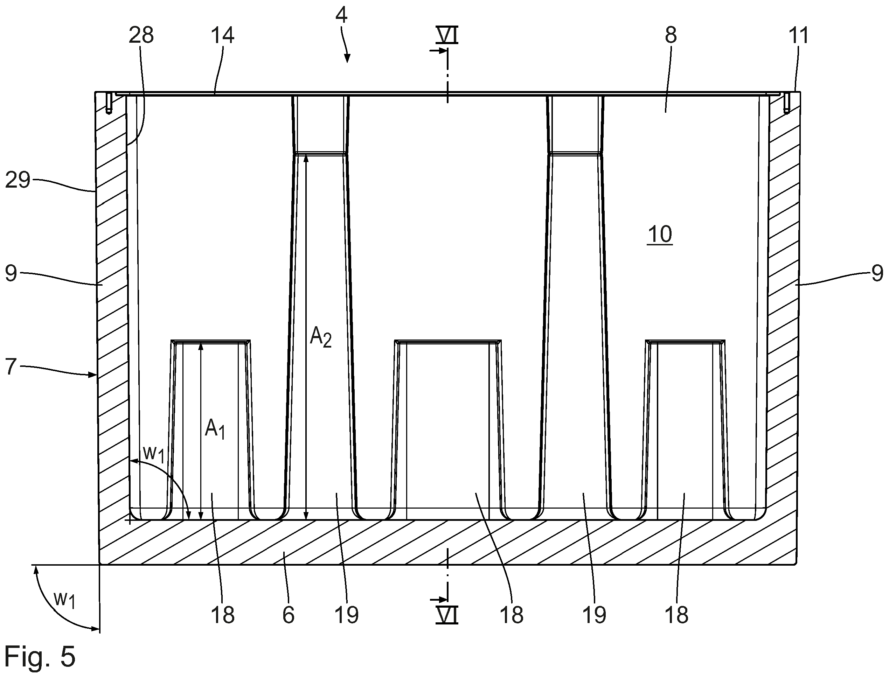

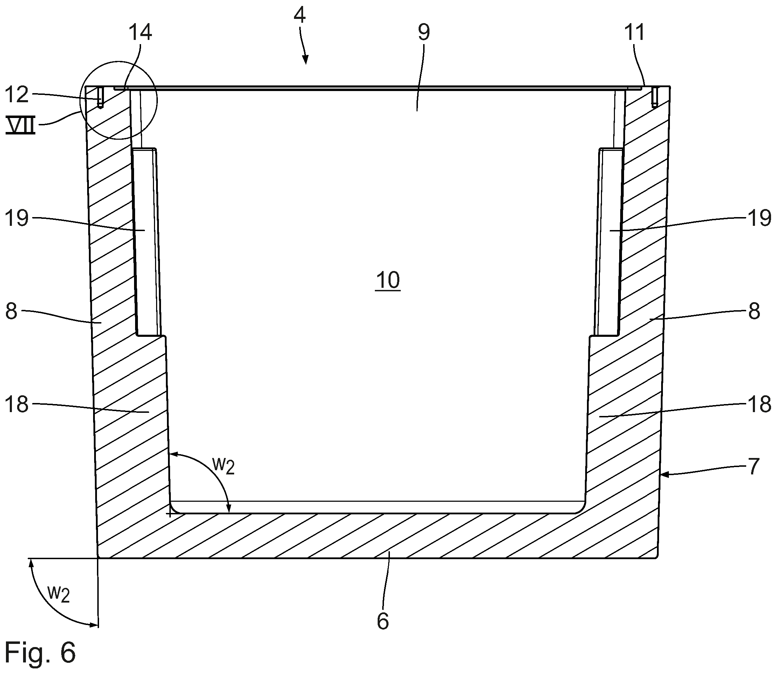

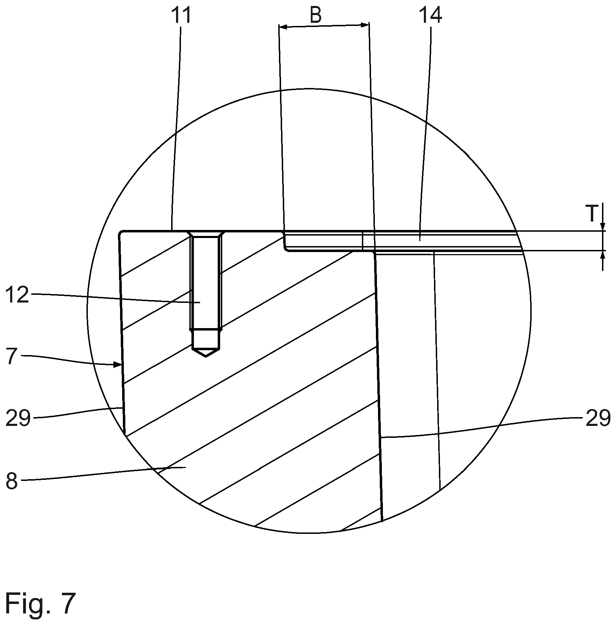

Eine in Fig. 1 bis 7 als Ganzes mit 1 bezeichnete Batterie ist eine Traktionsbatterie, die insbesondere für den Einsatz in einem Flurförderzeug dient. Die Batterie 1 umfasst ein Gehäuse 2 und in dem Gehäuse 2 angeordnete Batteriemodule 3. Gemäß dem gezeigten Ausführungsbeispiel umfasst die Batterie 1 sechs Batteriemodule 3.

Das Gehäuse 2 weist einen einteiligen Behälter 4 auf, an dem ein Deckel 5 lösbar befestigt ist.

Der Behälter 4 weist als Material Gusseisen auf. In dem gezeigten Ausführungsbeispiel ist der Behälter 4 aus dem Gusseisenmaterial EN-GJL-150 hergestellt.

Der Behälter 4 weist eine Bodenplatte 6 auf, die eine viereckige Innenkontur und eine viereckige Außenkontur aufweist. Einteilig mit der Bodenplatte 6 ist eine umlaufende Seitenwandung 7 verbunden, mit zwei Längswänden 8 und zwei Querwänden 9. Die Längswände 8 weisen eine längere Längenerstreckung auf als die Querwände 9. Der Behälter 4 umgibt einen Hohlraum 10, in dem die Batteriemodule 3 angeordnet sind. Die Seitenwandung 7 ist sowohl an ihrer dem Hohlraum 10 zugewandten Innenseite 28 als auch an ihrer dem Hohlraum 10 abgewandten Außenseite 29 jeweils mit einer Ausführschräge ausgeführt. Die Herstellung des Behälters 4 als Gussteil ist dadurch vereinfacht. Die Ausführschrägen sind dadurch ausgebildet, dass die Seitenwandung 7 mit einem Seitenwandungswinkel w₁ zwischen der Bodenplatte 6 und der Querwand 9 von 90,5° und einem Seitenwandungswinkel w₂ zwischen Bodenplatte 6 und Längswand 8 von 91,5° angeordnet ist. Wesentlich ist, dass die Seitenwandungswinkel w₁, w₂ größer sind als 90° und insbesondere kleiner sind als 95°.

Die Seitenwandung 7 weist eine obere, der Bodenplatte 6 abgewandte Stirnfläche 11 auf. Entlang des Umfangs der Seitenwandung 7 sind an der Stirnfläche 11 mehrere Befestigungsaufnahmen 12 integriert ausgebildet. Die Befestigungsaufnahmen 12 sind insbesondere als Gewindebohrungen ausgeführt. Dadurch kann der Deckel 5 mit korrespondierenden Befestigungsschrauben 13 unmittelbar am Behälter 4 angeschraubt werden. Es versteht sich, dass auch eine andere Art der Befestigung denkbar ist. Beispielsweise könnten an der Stirnfläche 11 auch erhabene Befestigungszapfen, insbesondere mit einem Außengewinde, angegossen sein, so dass der Deckel auf die Zapfen aufgesetzt und mit Muttern verschraubt wird.

An der Stirnfläche 11 ist eine umlaufende Vertiefung 14 als Nut ausgebildet, die eine Breite B und eine Tiefe T aufweist. Die Breite beträgt insbesondere mindestens 20 mm und die Tiefe insbesondere 5 mm. Die Vertiefung 14 dient zur Aufnahme einer nicht dargestellten Dichtung beim Aufsetzen des Deckels 5 auf den Behälter 4. Der Deckel 5 ist am Behälter 4 abgedichtet montierbar.

An dem Behälter 4 sind mehrere Befestigungsmittel 15 integriert ausgebildet. Die Befestigungsmittel 15 erstrecken sich jeweils entlang einer Längsachse, die quer und insbesondere senkrecht zur Bodenplatte 6 und insbesondere zu einer dem Hohlraum 10 zugewandten Oberseite der Bodenplatte 6 orientiert sind. Die Befestigungsmittel 15 sind jeweils als Aufnahmebohrungen, insbesondere mit einem metrischen Innengewinde, ausgeführt. In die Befestigungsmittel 15 kann eine Befestigungsschraube und/oder ein Aufnahmezapfen unmittelbar eingesetzt werden.

Gemäß dem Ausführungsbeispiel ist eine erste Gruppe von Befestigungsmitteln 15 unmittelbar in der Bodenplatte 6 ausgebildet. Diese Gruppe von Befestigungsmitteln 15 weist einen Abstand von 0 bezüglich der Bodenplatte 6 auf. Insbesondere sind zwölf Befestigungsmittel 15 entlang zweier paralleler Linien 16 mit jeweils sechs Befestigungsmitteln 15 angeordnet. Die horizontalen Abstände der Befestigungsmittel 15 entlang der Linien 16 sind derart, dass sie die Eckpunkte von korrespondierenden Befestigungszapfen 17 an den Batteriemodulen 3 korrespondieren. Die Linien 16 sind insbesondere parallel zu den Querwänden 9 und insbesondere parallel zueinander angeordnet. Die Befestigungszapfen 17 sind unmittelbar an der Unterseite der jeweiligen Batteriemodule 3 angeordnet. Die Batteriemodule 3 können unmittelbar auf der Bodenplatte 6 abgestellt und mit den Befestigungszapfen 17 in den Befestigungsmittel 15 angeordnet werden.

Der Behälter 4 weist mehrere Befestigungsstege 18, 19 auf. Die Befestigungsstege 18, 19 sind jeweils an den Längswänden 8 integral ausgebildet. Die Befestigungsstege 18, 19 sind jeweils als Vertikalsteg an der dem Hohlraum 10 zugewandten Innenseite der jeweiligen Längswand 8 ausgebildet. Die Befestigungsstege 18, 19 ragen in den Hohlraum 10 an der jeweiligen Längswand 8 hinein. In einer Ebene parallel zur Bodenplatte 6 weisen die Befestigungsstege 18, 19 im Wesentlichen eine rechteckförmige Querschnittsfläche auf. An einer jeweiligen oberen Stirnfläche der Befestigungsstege 18, 19 sind Befestigungsmittel 15 analog den Befestigungsmitteln 15 in der Bodenplatte 6 ausgeführt. Je nach Größe der Fläche des Befestigungsstegs 18, 19 können zwei, drei oder vier Befestigungsmittel 15 an dem jeweiligen Befestigungssteg 18, 19 ausgebildet sein.

Die Seitenwandung 7 weist eine Mindest-Wandstärke von 45 mm auf. Insbesondere weisen die Querwände 9 die Mindestwandstärke auf. Die Längswände 8 weisen eine größere Wandstärke auf, die insbesondere 65 mm beträgt. Im Bereich der Befestigungsstege 18, 19 ist die Wandstärke zusätzlich erhöht.

Die Befestigungsstege 18, 19 unterscheiden sich durch den jeweiligen Abstand A₁, A₂ zur Bodenplatte 6. Der Abstand A₁ der Befestigungsstege 18 ist kleiner als der Abstand A₂ der Befestigungsstege 19. Insbesondere beträgt der Abstand A₁ mindestens 250 mm] und der Abstand A₂ mindestens 500 mm].

Insbesondere sind die Abstände A₁, A₂ so gewählt, dass dieser Höhenabstand ausreicht, um ein Batteriemodul darin anordnen zu können.

Insbesondere sind die Befestigungsmittel 15 an den Befestigungsstegen 18 derart ausgebildet, dass ein als Halteplatte 20 ausgebildetes Haltebauteil auf die Befestigungsstege 18 aufgesetzt und mit Befestigungsschrauben 13 in den Befestigungsmitteln 15 der Befestigungsstege 18 verschraubt werden kann. Dazu weist die Halteplatte 20 entsprechende Öffnungen auf, die mit den Befestigungszapfen 17 der Batteriemodule 6 korrespondieren. An einer Unterseite der Halteplatte 20 können Haltemuttern 21 auf die Befestigungszapfen 17 der Batteriemodule 3 aufgeschraubt werden. Die Batteriemodule 3 können an der Halteplatte 20 vormontiert werden.

Drei Batteriemodule 3 sind unmittelbar an der Bodenplatte 6 befestigt. Drei weitere Batteriemodule 3 sind mittels der Halteplatte 20 mittelbar an dem Behälter 4 befestigt. Die Batteriemodule 3 sind in zwei Lagen innerhalb des Behälters 4 angeordnet und lösbar daran befestigt.

Oberhalb der Batteriemodule 3 ist eine weitere Halteplatte 20 angeordnet und mit Befestigungsschrauben 13 an den in den Befestigungsstegen 19 angeordneten Befestigungsmitteln 15 verschraubt. Diese obere Halteplatte 20 dient zur Befestigung einer sogenannten Technikplatte 22. Die Batteriemodule 3 die insbesondere mit Stromkabeln und/oder Stromschienen parallel und/oder in Reihe verschaltet sein können, sind an die Technikplatte 22 angeschlossen. Die Technikplatte 22 weist dazu nicht näher dargestellte Technikkomponenten wie Kabelführungen, Sicherungen, Schütz und/oder eine Steuer- und Prozesseinheit, die auch als CCU bezeichnet wird, auf. Die Technikplatte 22 umfasst insbesondere eine Kontaktplatte 23, die mittels Verbindungsleitungen 24 beweglich an die Technikplatte 22 angeschlossen ist. Die Kontaktplatte 23 trägt elektrische Anschlüsse 25 für die Batterie 1. Die elektrischen Anschlüsse 25 sind durch eine Öffnung 26 am Deckel 5 durchgeführt. Die elektrischen Anschlüsse 25 dienen zum Anschließen von Stromkabeln an die Batterie 1. Insbesondere ist die Kontaktplatte 23 am Deckel 5 befestigt. Die elektrischen Anschlüsse 25 sind zuverlässig und definiert am Deckel 5 gehalten.

Aufgrund der Anordnung der Befestigungsmittel 15 an dem Behälter 4 mit verschiedenen Höhenabständen zur Bodenplatte 6 ist ein mehrlagiger und modularer Aufbau der Batterie 1 möglich. Insbesondere weist die Batterie 1 mindestens ein Batteriemodul 3 auf, kann aber auch mehrere Batteriemodule 3 umfassen.

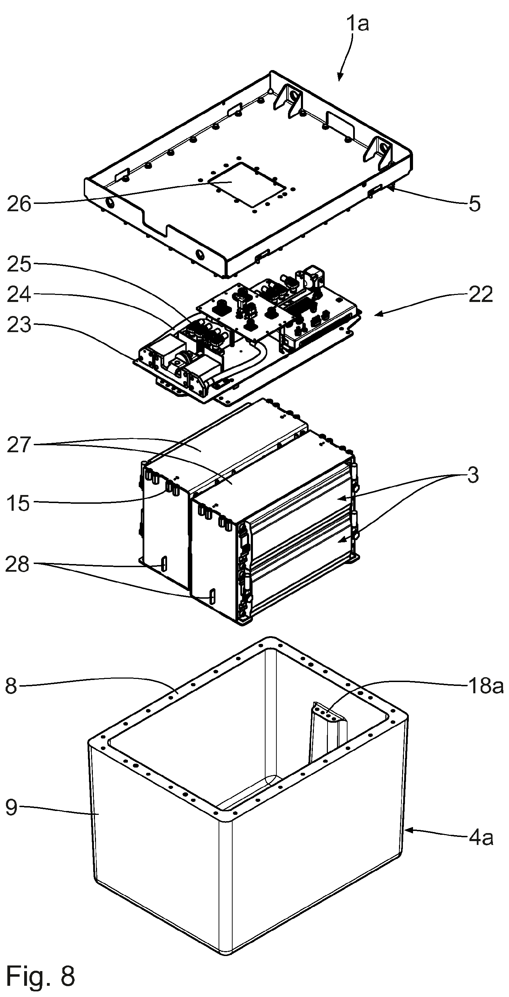

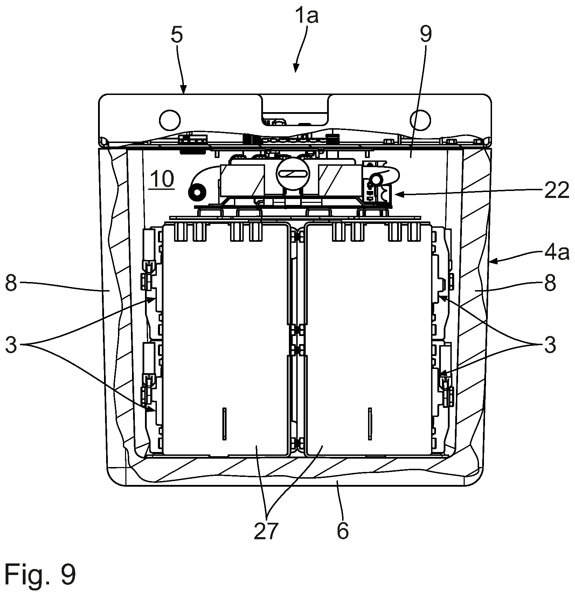

Im Folgenden wird unter Bezugnahme auf Fig. 8 und 9 ein weiteres Ausführungsbeispiel für ein Gehäuse einer Batterie beschrieben. Konstruktiv identische Bauteile erhalten dieselben Bezugszeichen wie bei dem vorherigen Ausführungsbeispiel auf dessen Beschreibung hiermit verwiesen wird. Konstruktiv unterschiedliche, aber funktionell gleichartige Bauteile erhalten die selben Bezugszeichen mit einem nachgestellten a.

Der wesentliche Unterschied gegenüber dem vorherigen Ausführungsbeispiel besteht darin, dass die Batteriemodule 3 jeweils in einem Haltekäfig 27 gehalten sind. Die Batterie 1a umfasst zwei Batteriemodule 3. Jedes Batteriemodul 3 ist in einem Haltekäfig 27 angeordnet. Der Haltekäfig 27 ist an der Bodenplatte 6 befestigt. Dazu können insbesondere nicht dargestellte Haltewinkel dienen, die mit einem ersten Winkelabschnitt an einer Außenseite eines Haltekäfigs 27 an einem Haltesteg 28 eingehakt werden. Der erste Winkelabschnitt ist also parallel zu der Seitenwand des Haltekäfigs 27 orientiert. Der zweite Winkelabschnitt ist um etwa 90° gegenüber dem ersten Winkelabschnitt abgekantet und weist durch mindestens eine Durchgangsöffnung auf, um eine Befestigungsschraube 13 durchzuführen und in den Befestigungsbohrungen 15 in der Bodenplatte 6 einzuschrauben.

An seiner Oberseite weist der Haltekäfig 27 jeweils mindestens eine Gewindeaufnahme als Befestigungsmittel 15 auf. Die Gewindeaufnahme weist ein metrisches Innengewinde auf und dient zum Einschrauben eines Befestigungsmittels 13, um die Technikplatte 22, insbesondere eine Trägerplatte der Technikplatte 22, zu befestigen.

Die Befestigungsstege 18a sind bei dem gezeigten Ausführungsbeispiel an der kürzeren Querwand 9 integriert angeordnet.

Die Haltekäfige 27 sind jeweils als Blechwanne ausgeführt mit einem Bodenelement, das in der gezeigten Anordnung der Batterie 1a dem Bodenelement des benachbarten Haltekäfigs 27 zugewandt angeordnet ist. Entsprechend sind die dem Bodenelement gegenüberliegenden Öffnungen des jeweiligen Haltekäfigs 27 einander abgewandt angeordnet. Die Öffnungen der Haltekäfige 27 sind der jeweiligen Längswand 8 des Behälters 4a zugewandt.

In den Befestigungsmitteln 15 des Befestigungsstegs 18a sind Befestigungsschrauben für die Befestigung der Technikplatte 22 angeordnet.

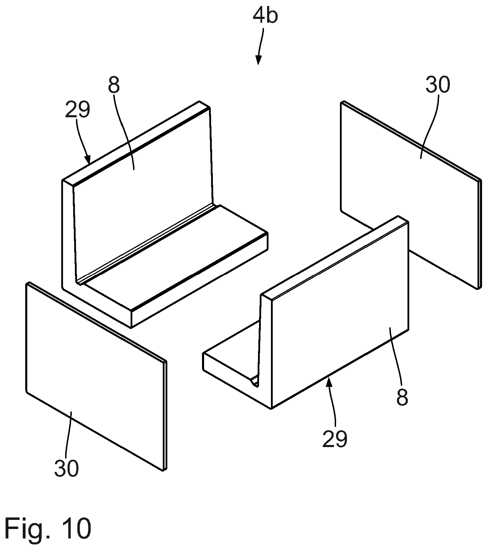

Im Folgenden wird unter Bezugnahme auf Fig. 10 ein weiteres Ausführungsbeispiel für ein Gehäuse einer Batterie beschrieben. Konstruktiv identische Teile erhalten dieselben Bezugszeichen wie bei dem vorherigen Ausführungsbeispiel, auf dessen Beschreibung hiermit verwiesen wird. Konstruktiv unterschiedliche, aber funktionell gleichartige Bauteile erhalten die selben Bezugszeichen mit einem nachgestellten b.

Der wesentliche Unterschied gegenüber den bisherigen Ausführungsbeispielen besteht darin, dass der Behälter 4b nicht einteilig, sondern mehrteilig ausgeführt ist. Dazu weist der Behälter 4b zwei Behälterkomponenten 29 auf, die jeweils identisch ausgeführt und einander spiegelsymmetrisch gegenüberliegend angeordnet sind. Die Behälterkomponenten 29 sind jeweils L-förmig ausgeführt und weisen jeweils eine Seitenwand 8, 9, insbesondere jeweils die Längswand 8, auf. Außerdem weisen die Behälterkomponenten jeweils einen Abschnitt der Bodenplatte 6b auf. Die beiden Behälter-Komponenten 29 werden mit den Bodenplattenelementen einander zugewandt angeordnet und bilden eine U-Form. Die U-Form wird durch zwei Stirnseitenplatten 30 geschlossen. Die Verbindung der Behälterkomponenten 29 miteinander und insbesondere mit den Stirnseitenplatten 30 kann unlösbar erfolgen, beispielsweise durch Schweißen. Alternativ sind auch lösbare Fügeverbindungen möglich, insbesondere Schraubverbindungen.

## Patentansprüche

1. Gehäuse für eine Batterie, insbesondere für eine Traktionsbatterie, umfassend
a. einen Behälter (4; 4a),
i. der eine Bodenplatte (6) und eine an der Bodenplatte (6) umlaufende Seitenwandung (7) aufweist,
ii. der Gusseisen und/oder Gussstahl aufweist,
b. einen lösbar mit dem Behälter (4; 4a) verbindbaren Deckel (5).

2. Gehäuse gemäß Anspruch 1, **dadurch gekennzeichnet, dass** die Bodenplatte (6) eine viereckige, insbesondere rechteckige, Innenkontur aufweist.

3. Gehäuse gemäß einem der vorstehenden Ansprüche, **dadurch gekennzeichnet, dass** das Gusseisen Lamellengraphit aufweist und insbesondere als EN-GJL-150 ausgeführt ist.

4. Gehäuse gemäß einem der vorstehenden Ansprüche, **dadurch gekennzeichnet, dass** die Seitenwandung (7) eine Wandstärke aufweist, die mindestens 20 mm beträgt.

5. Gehäuse gemäß einem der vorstehenden Ansprüche, **gekennzeichnet durch** am Behälter (4; 4a) integriert ausgebildete Befestigungsmittel (15) zum Befestigen mindestens eines Batteriemoduls (3) und/oder eines Haltebauteils (20, 27).

6. Gehäuse gemäß Anspruch 5, **dadurch gekennzeichnet, dass** die Befestigungsmittel (15) an der Bodenplatte (6) und/oder an der Seitenwandung (7), insbesondere an einem an der Seitenwandung (7) integriert ausgebildeten Befestigungssteg (18, 19; 18a), angeordnet sind.

7. Gehäuse gemäß Anspruch 5 oder 6, **dadurch gekennzeichnet, dass** sich die Befestigungsmittel (15) jeweils entlang einer Längsachse erstrecken, die quer, insbesondere senkrecht, zur Bodenplatte (6) orientiert sind.

8. Gehäuse gemäß einem der Ansprüche 5 bis 7, **dadurch gekennzeichnet, dass** mindestens zwei Befestigungsmittel (15) mit unterschiedlichem Abstand (A₁, A₂) zur Bodenplatte (6) angeordnet sind.

9. Gehäuse gemäß einem der vorstehenden Ansprüche, **dadurch gekennzeichnet, dass** die Seitenwandung (7) an ihrer Außenseite Ausführschrägen aufweist.

10. Gehäuse gemäß einem der vorstehenden Ansprüche, **dadurch gekennzeichnet, dass** die Seitenwandung (7) an ihrer der Bodenplatte (6) abgewandten Stirnfläche (11) eine, insbesondere umlaufende, Vertiefung (14) aufweist.

11. Batterie, insbesondere Traktionsbatterie, umfassend
a. ein Gehäuse (2) gemäß einem der vorstehenden Ansprüche,
b. mindestens ein in dem Gehäuse (2) lösbar befestigtes Batteriemodul (3).

12. Batterie gemäß Anspruch 11, **dadurch gekennzeichnet, dass** das mindestens eine Batteriemodul (3) unmittelbar an dem Behälter (4), insbesondere an der Bodenplatte (6), befestigt ist.

13. Batterie gemäß Anspruch 11 oder 12, **gekennzeichnet durch** ein am Behälter (4; 4a) lösbar befestigbares Haltebauteil (20, 27) zum Befestigen des mindestens einen Batteriemoduls (3) und/oder mindestens eines Technikmoduls (22).

14. Batterie gemäß Anspruch 13, **dadurch gekennzeichnet, dass** das Haltebauteil als Halteplatte (20) für das mindestens eine Batteriemodul (3) oder für das Technikmodul (22) oder als Haltekäfig (27) für das mindestens eine Batteriemodul (3) ausgeführt ist.

15. Batterie gemäß einem der Ansprüche 11 bis 14, **dadurch gekennzeichnet, dass** der Deckel (5) eine Öffnung (26) aufweist, an der Anschlüsse (25) für die Batterie (1; 1a) angeordnet sind.
